Europäisches Patentamt

European Patent Office

Office européen des brevets

(19)

(11)  EP 0 760 606 B1

(12)  EUROPEAN PATENT SPECIFICATION

(45) Date of publication and mention
of the grant of the patent:
**25.07.2001   Bulletin 2001/30**

(21) Application number: **95920645.9**

(22) Date of filing: **24.05.1995**

(51) Int Cl.[7]: **A23G 3/30**

(86) International application number:
**PCT/US95/06583**

(87) International publication number:
**WO 95/32637 (07.12.1995 Gazette 1995/52)**

(54) **CHEWING GUM HAVING IMPROVED TEXTURE AND CONTAINING MEDIUM CHAIN TRIGLYCERIDES**

KAUGUMMI MIT VERBESSERTER BESCHAFFENHEIT, DER MITTELKETTIGE TRIGLYZERIDE ENTHÄLT

CHEWING-GUM A TEXTURE AMELIOREE CONTENANT DES TRIGLYCERIDES A CHAINE MOYENNE

(84) Designated Contracting States:
**DE DK ES FR GB IT**

(30) Priority: **27.05.1994  WOPCT/US94/05771
29.11.1994  US 346509**

(43) Date of publication of application:
**12.03.1997   Bulletin 1997/11**

(73) Proprietor: **WM. WRIGLEY JR. COMPANY
Chicago Illinois 60611 (US)**

(72) Inventors:
• **BUNCZEK, Michael T.
Dolton, IL 60419 (US)**
• **MAZZONE, Philip
Griffith, IN 46319 (US)**
• **McGREW, Gordon N.
Evanston, IL 60201 (US)**
• **URNEZIS, Philip W.
Lombard, IL 60148 (US)**
• **YATKA, Robert J.
Orland Park, IL 60462 (US)**
• **GREENBERG, Michael J.
Northbrook, IL 60062 (US)**

(74) Representative:
**Baverstock, Michael George Douglas et al
BOULT WADE TENNANT,
Verulam Gardens
70 Gray's Inn Road
London WC1X 8BT (GB)**

(56) References cited:
ES-A- 2 040 633          JP-A- 58 146 241
US-A- 4 378 374          US-A- 4 446 157
US-A- 4 452 820          US-A- 5 156 866

EP 0 760 606 B1

**Description**

The present invention relates generally to chewing gum. More specifically, the present invention relates to improved formulations for bases and methods of making same.

Chewing gum generally consists of a water insoluble gum base and a water soluble portion along with flavors. The water soluble portion and flavors dissipate during chewing and the gum base is retained in the mouth throughout the chew.

The insoluble gum base generally comprises elastomers, resins, fats and oils, softeners, and inorganic fillers. Elastomers can include synthetic elastomers including polyisobutylene, isobutylene-isoprene copolymers, styrene-butadiene copolymers, polyvinyl acetate, polyisoprene, polyethylene, vinyl acetate - vinyl laurate copolymers, and combinations thereof. Natural elastomers that can be used include natural rubber.

The gum base can include elastomer plasticizers. Such elastomer plasticizers can include natural rosin esters, as well as other elastomer plasticizers. Additionally, the gum base can include fillers/texturizers and softeners/emulsifiers. Softeners are added to chewing gum in order to optimize the chewability and mouth feel of the gum. Softeners/emulsifiers that are typically used include tallow, hydrogenated tallow, hydrogenated and partially hydrogenated vegetable oils, cocoa butter, glycerol monostearate, glycerol triacetate, lecithin, and combinations thereof.

US-A-4,452,280 descibes a chewing gum base and various softeners including now -di -and triglycerides of fathy acids. ES-A-2,040,633 discloses a mixture of glycerol tricaprate and glycerol tricaprylate for use in on anti-halitosis and composition.

In addition to a water insoluble gum base portion, a typical chewing gum composition includes a water soluble portion and one or more flavoring agents. The water soluble portion can include bulk sweeteners, high intensity sweeteners, flavoring agents, softeners, emulsifiers, colors, acidulants, fillers, antioxidants, and other components that provide desirable attributes.

SUMMARY OF THE INVENTION

The present invention provides improved chewing gum formulations and bases, as well as methods of producing chewing gum and bases. Pursuant to the present invention, a base is provided that includes medium chain triglycerides. The medium chain triglycerides are used in the base as a softener and/or emulsifier or to replace some or a large portion of hydrogenated fats. The base can be used to create a chewing gum having improved texture and softness.

A variety of base and chewing gum formulations including medium chain triglycerides can be created and/or utilized pursuant to the present invention. The base formulations of the present invention may be conventional bases that include wax or are wax-free, tacky or non-tacky and/or bubble gum-type bases. The gum formulations can be low or high moisture formulations containing low or high amounts of moisture-containing syrup. Medium chain triglycerides can also be used in low sugar and non-sugar containing gum formulations made with sorbitol, mannitol, other polyols, and non-sugar carbohydrates. Non-sugar formulations can include low or high moisture sugar-free chewing gums.

In an embodiment, the medium chain triglycerides are used in the base as a softener and/or are combined with other base softeners for use in chewing gum base. Such other softeners include, but are not limited to, fats and oils, such as tallow, hydrogenated and partially hydrogenated vegetable oils, cocoa butter, mono- and diglycerides, acetylated monoglycerides, softeners such as glycerol triacetate, waxes such as paraffin and microcrystalline waxes, and emulsifiers such as lecithin.

In an embodiment, the medium chain triglycerides are used to replace at least a substantial portion of hydrogenated fats in the base.

The medium chain triglyceride softener, when used according to the present invention, affords the chewing gum an improved texture, improved shelf life, and improved flavor quality. Even though medium chain triglycerides are similar to other fats and oils in some respects, medium chain triglycerides are easily digested and provide other health attributes that create a resultant chewing gum product that has a high consumer-acceptability.

In an embodiment, the present invention provides a gum base comprising an elastomer and a sufficient amount of medium chain triglycerides to create a gum base that is softer than a gum base that does not include medium chain triglycerides.

In an embodiment, the base comprises at least 0.02% by weight medium chain triglycerides.

In an embodiment, the base is wax-free.

In an embodiment, the base is non-tacky.

In an embodiment, the base is a bubble gum-type base.

In an embodiment, the base includes at least one resin.

In an embodiment, the base includes at least one softener chosen from the group consisting of: tallow; hydrogenated tallow; hydrogenated and partially hydrogenated vegetable oils; cocoa butter; glycerol monostearate; glycerol triacetate; and lecithin.

In an embodiment, the medium chain triglycerides comprise not more than 20% by weight of the base.

In an embodiment, the present invention provides a method for creating chewing gum comprising the step of substituting for a typical softener or emulsifier in a gum base that is used to create a chewing gum medium chain triglycerides.

In an embodiment, the medium chain triglycerides comprise approximately 0.01% to about 5% by weight of the chewing gum formulation.

In an embodiment, the present invention provides a method for creating gum base comprising the step of substituting for a hydrogenated fat in a gum base formulation medium chain triglycerides.

It is an advantage of the present invention to provide an improved chewing gum formulation.

A further advantage of the present invention is to provide an improved base that can be used to create chewing gum.

Another advantage of the present invention is that it provides an improved chewing gum softener.

Still further, an advantage of the present invention is that it provides a method of replacing at least some of the hydrogenated fats in base formulations.

Additionally, an advantage of the present invention is that it provides an improved emulsifying agent for chewing gum.

Moreover, an advantage of the present invention is that it provides an improved method for creating chewing gum.

Furthermore, an advantage of the present invention is that it provides a softer base.

Still further, an advantage of the present invention is that it provides a chewing gum having improved flavor quality.

Additional features and advantages of the present invention are described in, and will be apparent from, the detailed description of the presently preferred embodiments.

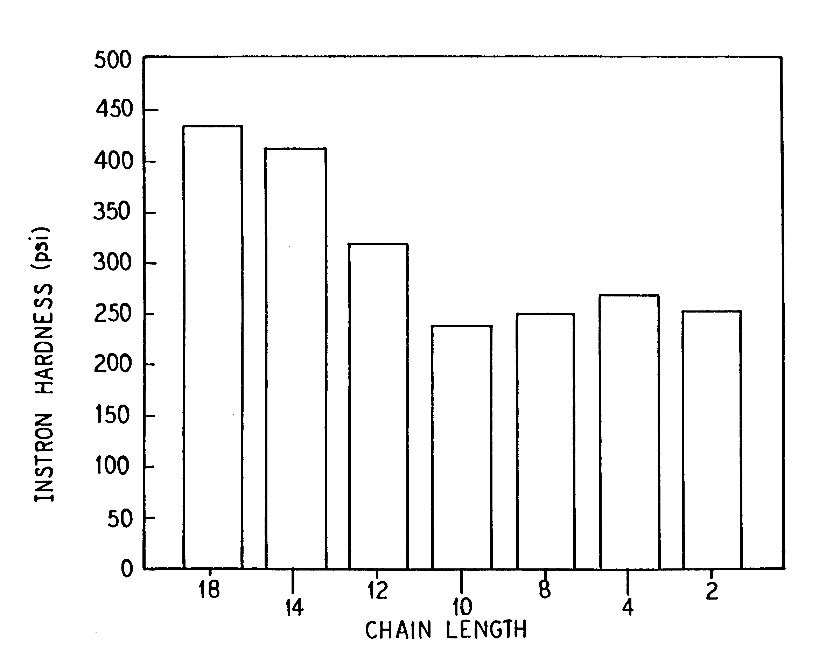

## BRIEF DESCRIPTION OF THE FIGURE

The Figure illustrates, graphically, the effects of triglyceride chain length on base hardness.

## DETAILED DESCRIPTION OF THE PRESENTLY PREFERRED EMBODIMENTS

The present invention provides improved chewing gum formulations and base formulations. Pursuant to the present invention, medium chain triglycerides are used. The medium chain triglycerides are used in base formulations to provide improved properties. Specifically, the medium chain triglycerides can be used as softeners and/or emulsifying agents or to replace some or all of the hydrogenated fats that are typically used in a gum base.

Medium chain triglycerides are fat/oil substances that can be obtained from the fractionation of coconut oil. Medium chain triglycerides are made up of a mixture of medium chain fatty acids (MCFA) ranging from caproic to lauric ($C_6$-$C_{12}$) in its triglyceride form. Fractionated coconut oil is generally about 95% caprylic ($C_8$:0) and capric ($C_{10}$:0). The triglycerides of coconut oil are heat hydrolyzed to form free fatty acid and glycerol, and to methyl esters of fatty acids. The esters are fractionally distilled to separate the medium chain fatty acids and reesterified with glycerol to form medium chain triglycerides.

Medium chain triglycerides are a clear, tasteless, odorless product that has a low viscosity and good spreadability. Medium chain triglycerides are somewhat more soluble in water than long chain triglycerides. Due to the medium chain triglycerides' tasteless and odorless properties, medium chain triglycerides provide a good flavor carrier and solvent and can be used in candy as a release agent.

Because medium chain triglycerides are saturated, they have a low potential for oxidation. Medium chain triglycerides also have a lower molecular weight than most fats/oils and therefore, are a thin oil that affords a soft gum base when added to other gum base ingredients. In this regard, the inventors have discovered that medium chain triglycerides will afford a gum base that is softer than a gum base that includes long chain triglycerides or even short chain triglycerides. Medium chain triglycerides also have a very clear flavor and do not contribute any off flavors to the gum base.

The United States Food & Drug Administration is now considering medium chain triglycerides in a GRAS Affirmation petition under the generic name of captrin. Currently, its unique easy digestibility as a vegetable oil makes it useful as a component in medical foods.

Medium chain triglycerides are available from Stepan Company of Maywood, New Jersey under the tradename NEOBEE® M-5, as well as from Karlshamns of Columbus, Ohio under the tradename CAPTEX®.

Pursuant to the present invention, medium chain triglycerides can be used in base formulations. In this regard, the medium chain triglycerides can be used as softeners and/or emulsifying agents. The medium chain triglycerides can be used in a variety of different chewing gum and base formulations.

Being filed on even day herewith is a patent application WO-A-95 326 36 entitled: "CHEWING GUM HAVING IMPROVED PROPERTIES AND CONTAINING MEDIUM CHAIN TRIGLYCERIDES" that is owned by the owner of the instant patent application. That application discusses and claims the use of medium chain triglycerides in chewing gum formulations.

As previously noted, chewing gum generally consists of a water insoluble gum base, a water soluble portion, and flavors.

The insoluble gum base generally comprises elastomers, resins, fats and oils, softeners, and inorganic fillers. The gum base may or may not include wax. The insoluble gum base can constitute approximately 5 to about 95 percent, by weight, of the chewing gum, more commonly, the gum base comprises 10 to about 50 percent of the gum, and in some preferred embodiments, 20 to about 35 percent, by weight, of the chewing gum.

In an embodiment, the chewing gum base of the present invention contains about 20 to about 60 weight percent synthetic elastomer, 0 to about 30 weight percent natural elastomer, about 5 to about 55 weight percent elastomer plasticizer, about 4 to about 35 weight percent filler, about 5 to about 35 weight percent softener, and optional minor amounts (about one percent or less) of miscellaneous ingredients such as colorants, antioxidants, etc.

Synthetic elastomers may include, but are not limited to, polyisobutylene with a GPC weight average molecular weight of about 10,000 to about 95,000, isobutylene-isoprene copolymer (butyl elastomer), styrene-butadiene copolymers having styrene-butadiene ratios of about 1:3 to about 3:1, polyvinyl acetate having a GPC weight average molecular weight of about 2,000 to about 90,000, polyisoprene, polyethylene, vinyl acetate-vinyl laurate copolymer having vinyl laurate content of about 5 to about 50 percent by weight of the copolymer, and combinations thereof.

Preferred ranges are, for polyisobutylene, 50,000 to 80,000 GPC weight average molecular weight, for styrene-butadiene, 1:1 to 1:3 bound styrene-butadiene, for polyvinyl acetate, 10,000 to 65,000 GPC weight average molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters, often called estergums, such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. the preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

In an embodiment, in addition to the medium chain triglycerides, pursuant to the present invention, softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Patent No. 5,286,500, the disclosure of which is incorporated herein by reference.

In addition to a water insoluble gum base portion, a typical chewing gum composition includes a water soluble bulk portion and one or more flavoring agents. The water soluble portion can include bulk sweeteners, high intensity sweeteners, flavoring agents, softeners, emulsifiers, colors, acidulants, fillers, antioxidants, and other components that provide desired attributes.

The softeners, which are also known as plasticizers and plasticizing agents, generally constitute between approximately 0.5 to about 15% by weight of the chewing gum. The softeners may, in addition to including medium chain triglycerides, include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners include both sugar and sugarless components. Bulk sweeteners typically constitute 5 to about 95% by weight of the chewing gum, more typically, 20 to 80% by weight, and more commonly, 30 to 60% by weight of the gum.

Sugar sweeteners generally include saccharidecontaining components commonly known in the chewing gum art, including, but not limited to, sucrose, dextrose, maltose, dextrin, dried invert sugar, fructose, levulose, galactose, corn syrup solids, and the like, alone or in combination.

Sorbitol can be used as a sugarless sweetener. Additionally, sugarless sweeteners can include, but are not limited to, other sugar alcohols such as mannitol, xylitol, hydrogenated starch hydrolysates, maltitol, and the like, alone or in combination.

High intensity artificial sweeteners can also be used in combination with the above. Preferred sweeteners include, but are not limited to sucralose, aspartame, salts of acesulfame, alitame, saccharin and its salts, cyclamic acid and its salts, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to about 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Examples of low caloric bulking agents include: polydextrose; Raftilos®, Raftilin®; Fructooligosaccharides (Nutra Flora®); Palatinose oligosaccharide; Guar Gum Hydrolysate (Sun Fiber®); or indigestible dextrin (Fibersol®). However, other low calorie bulking agents can be used.

A variety of flavoring agents can be used. The flavor can be used in amounts of approximately 0.1 to about 15 weight percent of the gum, and preferably, about 0.2 to about 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

The present invention, it is believed, can be used with a variety of processes for manufacturing chewing gum.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

Generally, the ingredients are mixed by first melting the gum base and adding it to the running mixer. The gum base may alternatively be melted in the mixer. Color and emulsifiers can be added at this time.

Medium chain triglycerides in its typical liquid form may be added to chewing gum during manufacture of the base. Medium chain triglycerides may be added at any time during processing of the base, but preferably, near the end of the batch to act as a softener.

Medium chain triglycerides may be added to conventional bases that contain wax or are wax-free bases, that may or may not contain polyvinyl acetate or terpene resins, or bases that contain natural gums or synthetic bases, bases that are non-tacky, or are bubble gum bases.

At levels of approximately 0.02% to about 20% by weight of the gum base, medium chain triglycerides may replace some or most of the partially hydrogenated or hydrogenated vegetable oils, mono- and di-glycerides, acetylated monoglycerides, or other softeners used in the gum base. Medium chain triglycerides may also be blended with the other softeners in the gum base and added during the base manufacturing process. A chewing gum base made with medium chain triglycerides will have greater oxidative stability due to the presence of medium chain triglycerides, and will give chewing gum a cleaner taste due to a reduction of off-tasting fats and oils.

Medium chain triglycerides may also be added to a chewing gum formulation in its liquid form or may be mixed with other gum or base softeners and added to a gum formulation during processing. Medium chain triglycerides may be added during the gum manufacturing at any time during processing, but preferably, early in the batch to allow thorough mixing with the gum base.

Medium chain triglycerides can be added to the chewing gum formulation so that they comprise approximately 0.01% to about 5% by weight of the chewing gum formulation. In a preferred embodiment, the medium chain triglycerides comprise approximately 0.02% to about 2% and most preferably, about 0.05% to about 0.5% by weight of the chewing gum formulation. Medium chain triglycerides may be blended with other softeners such as lecithin, glycerol triacetate, acetylated monoglycerides, mono- and di-glycerides, or other vegetable oils and fats that may be added to a gum formulation. When a solid softener is used, such as lecithin, medium chain triglycerides may act as a carrier or solvent for the particulate lecithin. It has been found that lecithin when mixed with medium chain triglycerides will allow for an easier dispersion of lecithin in a gum formulation. This should be contrasted with soy bean oil that is typically used as a carrier for lecithin. Unfortunately, soy bean oil has some off-taste and becomes rancid with time; but particulate lecithin in medium chain triglycerides gives a clean taste with good oxidation stability.

Medium chain triglycerides may also be blended with a wide range of natural and artificial flavor oils and act as a carrier for flavor oils. The clean, tasteless, and odorless properties of medium chain triglycerides makes it an excellent carrier for flavors such as spearmint, peppermint, cinnamon, wintergreen, and fruit flavors. The level of medium chain triglycerides mixed with flavors can vary over a wide range from approximately 1% to about 99% by weight since most gum flavors are oil soluble.

Medium chain triglycerides can also act as a carrier for artificial and natural colors such as in FD&C lake dispersions and natural esters like betacarotene and medium chain triglycerides eliminates the off-taste associated with fat/oil carriers and allows higher usage of color.

Medium chain triglycerides may also be used as a release agent for encapsulated flavors. Medium chain triglycerides can be added to an encapsulating media to allow for faster and easier dissolution of the encapsulating media.

Medium chain triglycerides may also have some effect as an emulsifier since medium chain triglycerides have a slight water solubility unlike concentrated fats and oils. Thus, medium chain triglycerides can be mixed with the flavor and carrier to provide an easier encapsulation of flavors.

By way of example, and not limitation, experiments and examples of the present invention will now be given:

EXPERIMENTS

The following experiments were performed to determine the effect of medium chain triglycerides on base. The following purified triglycerides were made with the following fatty acids.

1) Triacetin - $C_2$
2) Tributyrin - $C_4$
3) Tricaprylin - $C_8$
4) Tricaprin - $C_{10}$
5) Trilaurin - $C_{12}$
6) Trimyristin - $C_{14}$
7) Hydrogenated Cottonseed Oil - $C_{16}/C_{18}$

Each of these triglycerides was separately added to a base concentrate along with other softeners to determine their softening effect. Each of the base concentrates, to which the respective triglycerides were added, had the following formula:

|  | % |
| --- | --- |
| Isobutylene-isoprene copolymer | 10.52 |
| Polyisobutylene | 7.35 |
| Polyvinyl Acetate | 30.07 |
| Terpene Resins | 20.88 |
| Lecithin | 4.17 |
| Calcium Carbonate | 26.23 |
| Color | 0.75 |
| BHT | 0.03 |
|  | 100.00 |

To this base were added softeners and the various triglycerides to obtain the final base formulation:

|  | Example A | Example 1-6 |
| --- | --- | --- |
| Base Concentrate | 79.76 | 79.76 |
| Glycerol Monostearate | 4.79 | 4.79 |
| Hydrogenated Soybean Oil | 4.53 | 4.53 |

(continued)

|  | Example A | Example 1-6 |
|---|---|---|
| Partially Hydrogenated Cottonseed Oil | 3.20 | 3.20 |
| Hydrogenated Cottonseed Oil | 7.72 | 4.63 |
| Triglyceride | --- | 3.09 |
|  | 100.00 | 100.00 |

Example 1 used Triacetin
Example 2 used Tributyrin
Example 3 used Tricaprylin
Example 4 used Tricaprin
Example 5 used Trilaurin
Example 6 used Trimyristin

The base concentrate was made at a temperature of 115°C and allowed to cool and solidify. The concentrate was portioned and remelted at 115°C to add softeners. The base was then allowed to cool to solidify.

At room temperature, Instron Hardness was measured on the bases made in Example A and Example 1-6. Results are shown in the Figure. It can be seen from this data that Examples 3 and 4 with $C_8$ and $C_{10}$ fatty acids have lower Instron Hardness than any of the other fatty acid triglycerides, even those with $C_2$ and $C_4$ and thus make softer bases. It should be noted that medium chain triglycerides comprise approximately 90% $C_8$ and $C_{10}$ triglycerides.

The gum bases made in Example A and 1-6 were also evaluated by Rheometrics Dynamic Analyzer (RDA 700 Rheometer) and tested at 25°C, 35°C, and 45°C. Data gave evaluations in terms of:

1) Stress Relaxation;
2) Storage Modulus; and
3) Complex Viscosity.

All of these tests showed that base made with fatty acids triglycerides of $C_8$ and $C_{10}$ (MCTs) gave softer gum base compared to bases made with longer chain or shorter chain fatty acid triglycerides.

The experiments demonstrate that at least 40% of the hydrogenated fats, in this case cottonseed oil can be replaced in the base with medium chain triglycerides and provide a softer base as compared to other triglycerides. In this regard, it should be noted that medium chain triglycerides comprise approximately 90% $C_8$ and $C_{10}$ triglycerides.

EXAMPLES

The following contemplative examples of the invention and comparative examples are provided by way of explanation and illustration.

The formulas listed in Table I comprise various contemplative sugar formulas in which medium chain triglycerides can be added at various levels to gum.

TABLE 1 (WEIGHT PERCENT)

|  | Ex. 1 | Ex. 2 | Ex. 3 | Ex. 4 | Ex. 5 | Ex. 6 |
|---|---|---|---|---|---|---|
| Sugar | 61.55 | 61.5 | 61.35 | 62.5 | 62.0 | 61.0 |
| Base | 19.2 | 19.2 | 19.2 | 19.2 | 19.2 | 19.2 |
| Corn Syrup | 16.9 | 16.9 | 16.9 | 16.9 | 16.9 | 16.9 |
| Peppermint Flavor | 0.9 | 0.9 | 0.9 | 0.9 | 0.9 | 0.9 |
| Glycerin | 1.4 | 1.4 | 1.4 | 0.0 | 0.0 | 0.0 |
| Neobee M-5 | 0.05 | 0.10 | 0.25 | 0.50 | 1.0 | 2.0 |

In Table 2, dextrose monohydrate is added to a sugar formula with various levels of medium chain triglycerides.

TABLE 2

|  | Ex. 7 | Ex. 8 | Ex. 9 | Ex. 10 | Ex. 11 | Ex. 12 |
|---|---|---|---|---|---|---|
| Sugar | 55.65 | 55.6 | 55.45 | 56.2 | 55.7 | 54.7 |
| Base | 19.2 | 19.2 | 19.2 | 19.2 | 19.2 | 19.2 |
| Corn Syrup | 12.9 | 12.9 | 12.9 | 12.9 | 12.9 | 12.9 |
| Glycerin | 1.4 | 1.4 | 1.4 | 0.4 | 0.4 | 0.4 |
| Dextrose Monohydrate | 9.9 | 9.9 | 9.9 | 9.9 | 9.9 | 9.9 |
| Peppermint Flavor | 0.9 | 0.9 | 0.09 | 0.9 | 0.9 | 0.9 |
| Neobee M-5 | 0.05 | 0.10 | 0.25 | 0.50 | 1.0 | 2.0 |

Examples 13-18 are the same as Examples 7-12 except that Neobee M-5 is pre-blended with the peppermint flavor and added to the gum formulation.

The following Tables 4 through 11 give examples of gum formulations demonstrating formula variations in which medium chain triglycerides, in the form of liquid oil, can be used.

Examples 19-23 in Table 4 demonstrate the use of MCT in low-moisture sugar formulations having less than 2% theoretical moisture:

TABLE 4

|  | Ex. 19 | Ex. 20 | Ex. 21 | Ex. 22 | Ex. 23 |
|---|---|---|---|---|---|
| Sugar | 58.75 | 58.6 | 58.3 | 52.7 | 51.9 |
| Gum Base | 19.2 | 19.2 | 19.2 | 19.2 | 19.2 |
| Corn Syrup[a] | 6.0 | 6.0 | 6.0 | 6.0 | 6.0 |
| Dextrose Monohydrate | 10.0 | 10.0 | 10.0 | 10.0 | 10.0 |
| Lactose | 0.0 | 0.0 | 0.0 | 5.0 | 5.0 |
| Glycerin[b] | 5.0 | 5.0 | 5.0 | 5.0 | 5.0 |
| Flavor | 0.9 | 0.9 | 0.9[d] | 0.9[d] | 0.9[d] |
| Lecithin[c] | 0.1 | 0.1 | 0.1 | 0.2 | --- |
| Neobee M-5[c] | 0.05 | 0.2 | 0.5[d] | 1.0[d] | 2.0[d] |

[a]Corn syrup is evaporated to 85% solids, 15% moisture.

[b]Glycerin and syrup can be blended and co-evaporated.

[c]Lecithin and Neobee M-5 can be pre-blended.

[d]Flavor and Neobee M-5 can be pre-blended.

Examples 24-28 in Table 5 demonstrate the use of MCT in medium-moisture sugar formulations having about 2% to about 5% moisture.

TABLE 5

|  | Ex. 24 | Ex. 25 | Ex. 26 | Ex. 27 | Ex. 28 |
|---|---|---|---|---|---|
| Sugar | 53.35 | 53.2 | 52.9 | 52.3 | 51.5 |
| Gum Base | 19.2 | 19.2 | 19.2 | 19.2 | 19.2 |
| Corn Syrup[a] | 15.0 | 15.0 | 15.0 | 15.0 | 15.0 |
| Dextrose Monohydrate | 10.0 | 10.0 | 10.0 | 10.0 | 10.0 |
| Glycerin[b] | 1.4 | 1.4 | 1.4 | 1.4 | 1.4 |
| Flavor | 0.9[d] | 0.9[d] | 0.9[d] | 0.9[d] | 0.9[d] |
| Lecithin[c] | 0.1 | 0.1 | 0.1 | 0.2 | --- |
| Neobee M-5[c] | 0.05[d] | 0.2[d] | 0.5[d] | 1.0[d] | 2.0[d] |

[a]Corn syrup is evaporated to 85% solids, 15% moisture.

[b]Glycerin and syrup can be blended and co-evaporated.

[c]Neobee M-5 and Lecithin can be pre-blended.

[d]Flavor and Neobee M-5 can be pre-blended.

Examples 29-33 in Table 6 demonstrate the use of MCTs in high moisture sugar formulations having more than about 5% moisture.

TABLE 6

|  | Ex. 29 | Ex. 30 | Ex. 31 | Ex. 32 | Ex. 33 |
|---|---|---|---|---|---|
| Sugar | 50.95 | 50.7 | 50.4 | 48.9 | 48.0 |
| Gum Base | 24.0 | 24.0 | 24.0 | 24.0 | 24.0 |
| Corn Syrup | 24.0 | 24.0 | 24.0 | 24.6 | 24.6 |
| Glycerin | 0.0 | 0.0 | 0.0 | 0.4 | 0.4 |
| Flavor | 1.0 | 1.0 | 1.0 | 1.0 | 1.0 |
| Lecithin* | --- | 0.1 | 0.1 | 0.1 | --- |
| Neobee M-5 | 0.05 | 0.2 | 0.5 | 1.0 | 2.0 |

*Lecithin and Neobee M-5 can be pre-blended.

Examples 34-38 in Table 7 and Examples 39-48 in Tables 8 and 9 demonstrate the use of MCTs in low- and high-moisture gums that are sugar-free. Low-moisture gums have less than about 2% moisture, and high-moisture gums have greater than 2% moisture.

TABLE 7

|  | Ex. 34 | Ex. 35 | Ex. 36 | Ex. 37 | Ex. 38 |
|---|---|---|---|---|---|
| Base | 25.5 | 25.5 | 25.5 | 25.5 | 25.5 |
| Sorbitol | 50.85 | 50.7 | 50.5 | 50.0 | 48.0 |
| Mannitol | 12.0 | 12.0 | 12.0 | 12.0 | 13.0 |
| Glycerin | 10.0 | 10.0 | 10.0 | 10.0 | 10.0 |
| Flavor | 1.5 | 1.5 | 1.5 | 1.5 | 1.5 |
| Lecithin* | 0.1 | 0.1 | --- | --- | -- |
| Neobee M-5 | 0.05 | 0.2 | 0.5 | 1.0 | 2.0 |

*Lecithin and Neobee M-5 can be pre-blended. **Flavor and Neobee M-5 can be pre-blended.

TABLE 8

|  | Ex. 39 | Ex. 40 | Ex. 41 | Ex. 42 | Ex. 43 |
|---|---|---|---|---|---|
| Base | 25.5 | 25.5 | 25.5 | 25.5 | 25.5 |
| Sorbitol | 50.95 | 50.8 | 50.5 | 51.9 | 49.8 |
| Sorbitol Liquid* | 10.0 | 10.0 | 10.0 | 10.0 | 11.0 |
| Mannitol | 10.0 | 10.0 | 10.0 | 10.0 | 10.0 |
| Glycerin | 2.0 | 2.0 | 2.0 | 0.0 | 0.0 |
| Flavor | 1.5 | 1.5 | 1.5 | 1.5 | 1.5 |
| Lecithin** | --- | --- | --- | 0.1 | 0.2 |
| Neobee M-5 | 0.05 | 0.2 | 0.5 | 1.0 | 2.0 |

*Sorbitol liquid contains 70% sorbitol, 30% water.

**Lecithin and Neobee M-5 can be pre-blended. ***Flavor and Neobee M-5 can be pre-blended.

TABLE 9

|  | Ex. 44 | Ex. 45 | Ex. 46 | Ex. 47 | Ex. 48 |
|---|---|---|---|---|---|
| Base | 25.5 | 25.5 | 25.5 | 25.5 | 25.5 |
| Sorbitol | 50.95 | 50.7 | 50.4 | 52.0 | 51.0 |

TABLE 9   (continued)

|  | Ex. 44 | Ex. 45 | Ex. 46 | Ex. 47 | Ex. 48 |
|---|---|---|---|---|---|
| HSH Syrup* | 10.0 | 10.0 | 10.0 | 10.0 | 10.0 |
| Mannitol | 8.0 | 8.0 | 8.0 | 8.0 | 9.0 |
| Glycerin** | 4.0 | 4.0 | 4.0 | 2.0 | 1.0 |
| Flavor | 1.5 | 1.5 | 1.5 | 1.5 | 1.5 |
| Lecithin*** | --- | 0.1 | 0.1 | --- | --- |
| Neobee M-5**** | 0.05 | 0.2 | 0.5 | 1.0 | 2.0 |

*Lycasin brand hydrogenated starch hydrolyzate syrup.

**Glycerin and HSH syrup may be blended or co-evaporated.

***Lecithin and Neobee M-5 can be pre-blended.

****Flavor and Neobee M-5 can be pre-blended.

Table 10 shows sugar chewing gum formulations that can be made with MCTs and various types of sugars.

## TABLE 10

|  | Ex. 49 | Ex. 50 | Ex. 51 | Ex. 52 | Ex. 53 | Ex. 54 |
|---|---|---|---|---|---|---|
| Gum Base | 19.2 | 19.2 | 19.2 | 19.2 | 19.2 | 19.2 |
| Sucrose | 49.4 | 48.5 | 44.4 | 43.5 | 34.4 | 43.5 |
| Glycerin | 1.4 | 1.4 | 1.4 | 1.4 | 1.4 | 1.4 |
| Corn Syrup | 14.0 | 14.0 | 14.0 | 14.0 | 14.0 | 14.0 |
| Dextrose | 5.0 | 5.0 | --- | --- | 10.0 | 5.0 |
| Lactose | 5.0 | 5.0 | 10.0 | 10.0 | --- | --- |
| Fructose | 5.0 | 5.0 | 10.0 | 10.0 | 10.0 | 5.0 |
| Invert Sugar | --- | --- | --- | --- | 10.0 | 10.0 |
| Maltose | --- | --- | --- | --- | --- | --- |
| Corn Syrup Solids | --- | --- | --- | --- | --- | --- |
| Peppermint Flavor | 0.9 | 0.9 | 0.9 | 0.9 | 0.9 | 0.9 |
| Neobee M-5 | 0.1 | 1.0 | 0.1 | 1.0 | 0.1 | 1.0 |

|  | Ex. 55 | Ex. 56 | Ex. 57 | Ex. 58 | Ex. 59 | Ex. 60 |
|---|---|---|---|---|---|---|
| Gum Base | 19.2 | 19.2 | 19.2 | 19.2 | 19.2 | 19.2 |
| Sucrose | 34.4 | 43.5 | 34.4 | 43.5 | 42.4 | 46.5 |
| Glycerin | 1.4 | 1.4 | 1.4 | 1.4 | 1.4 | 1.4 |
| Corn Syrup | 14.0 | 14.0 | 14.0 | 14.0 | 11.0 | 11.0 |
| Dextrose | 10.0 | 5.0 | 10.0 | 5.0 | 10.0 | 5.0 |
| Lactose | --- | --- | --- | --- | --- | --- |
| Fructose | 10.0 | 5.0 | 10.0 | 5.0 | 5.0 | 5.0 |
| Invert Sugar | 10.0 | 10.0 | --- | --- | 5.0 | 5.0 |
| Maltose | --- | --- | 10.0 | 10.0 | --- | --- |
| Corn Syrup Solids | --- | --- | --- | --- | 5.0 | 5.0 |
| Peppermint Flavor | 0.9 | 0.9 | 0.9 | 0.9 | 0.9 | 0.9 |
| Neobee M-5 | 0.1 | 1.0 | 0.1 | 1.0 | 0.1 | 1.0 |

|  | Ex. 61 | Ex. 62 |
|---|---|---|
| Gum Base | 19.2 | 19.2 |
| Sucrose | 42.4 | 36.5 |
| Glycerin | 6.4 | 6.4 |
| Corn Syrup | 11.0 | 11.0 |
| Dextrose | 5.0 | 5.0 |
| Lactose |  |  |
| Fructose | 5.0 | 5.0 |
| Invert Sugar | 5.0 | 5.0 |
| Maltose | --- | --- |
| Corn Syrup Solids | 5.0* | 10.0* |
| Peppermint Flavor | 0.9 | 0.9 |
| Neobee M-5 | 0.1 | 1.0 |

*5-25DE maltodextrin can be used.

Table 11 shows chewing gum formulations that are free of sugar. These formulations can use a wide variety of other non-sugar alditols.

## TABLE 11

### (WEIGHT PERCENT)

|  | Ex. 63 | Ex. 64 | Ex. 65 | Ex. 66 | Ex. 67 | Ex. 68 |
|---|---|---|---|---|---|---|
| Gum Base | 25.5 | 25.5 | 25.5 | 25.5 | 25.5 | 25.5 |
| Glycerin | 2.0 | 2.0 | 2.0 | 2.0 | 2.0 | 2.0 |
| Sorbitol | 43.9 | 43.0 | 43.9 | 38.0 | 37.9 | 39.0 |
| Mannitol | --- | 10.0 | 10.0 | 10.0 | 10.0 | 6.0 |
| Sorbitol Liquid | 17.0 | 17.0 | --- | --- | --- | --- |
| Lycasin | --- | --- | 17.0 | 12.0 | 8.0 | 10.0 |
| Maltitol | 10.0 | --- | --- | 10.0 | --- | --- |
| Xylitol | --- | --- | --- | --- | 15.0 | 15.0 |
| Lactitol | --- | --- | --- | --- | --- | --- |
| Palatinit | --- | --- | --- | --- | --- | --- |
| Flavor | 1.5 | 1.5 | 1.5 | 1.5 | 1.5 | 1.5 |
| Neobee M-5 | 0.1 | 1.0 | 0.1 | 1.0 | 0.1 | 1.0 |

## TABLE 11 (Cont'd)

### (WEIGHT PERCENT)

|  | Ex. 69 | Ex. 70 | Ex. 71 | Ex. 72 | Ex. 73 | Ex. 74 |
|---|---|---|---|---|---|---|
| Gum Base | 25.5 | 25.5 | 25.5 | 25.5 | 25.5 | 25.5 |
| Glycerin | 8.0 | 8.0 | 8.0 | 2.0 | 1.0 | 0.0 |
| Sorbitol | 41.9 | 36.0 | 31.9 | 40.0 | 26.9 | 21.0 |
| Mannitol | 8.0 | 8.0 | 8.0 | --- | --- | --- |
| Sorbitol Liquid | 5.0 | --- | --- | --- | --- | --- |
| Lycasin | --- | 5.0 | 5.0 | 5.0 | 10.0 | 10.0 |
| Maltitol | --- | 5.0 | --- | --- | --- | --- |
| Xylitol | --- | --- | --- | 15.0 | 10.0 | 20.0 |
| Lactitol | 10.0 | 10.0 | 10.0 | --- | --- | --- |
| Palatinit | --- | --- | 10.0 | 10.0 | 25.0 | 21.0 |
| Flavor | 1.5 | 1.5 | 1.5 | 1.5 | 1.5 | 1.5 |
| Neobee M-5 | 0.1 | 1.0 | 0.1 | 1.0 | 0.1 | 1.0 |

The following examples of the invention are also shown in Table 12 for natural and synthetic gum bases with wax, Table 13 for chewing gum bases that are wax-free and have some reduced tack properties, Table 14 for wax free bubble gum bases, and Table 15 for wax-free gum bases having non-tack characteristics. These examples illustrate how MCTs can be added to a wide variety of chewing gum bases to partially replace some of the oils, fats, and base softeners.

## TABLE 12

## NATURAL AND SYNTHETIC BASES WITH WAX

## (WEIGHT PERCENT)

|  | Ex. 75 | Ex. 76 | Ex. 77 |
|---|---|---|---|
| Butyl Rubber | 11.7 | 10.0 | 9.0 |
| Styrene Butadiene Rubber | --- | --- | --- |
| Polyisobutylene | --- | 10.4 | 5.3 |
| Jelutong | --- | --- | --- |
| Ester Gum | 14.8 | --- | --- |
| Terpene Resin | 9.9 | 6.8 | 16.7 |
| Low MW Polyvinylacetate | 21.2 | 23.2 | 24.6 |
| High MW Polyvinylacetate | --- | --- | --- |
| Talc | --- | --- | --- |
| Calcium Carbonate | 11.2 | 14.7 | 20.1 |
| Acetylated Monoglyceride | --- | --- | --- |
| Hydrogenated Cotton Seed Oil | --- | 10.0 | 3.3 |
| Hydrogenated Soybean Oil | 9.0 | 11.1 | 3.3 |
| Partially Hydrogenated Soybean and Palm Oil | --- | 2.3 | --- |
| Partially Hydrogenated Cottonseed Oil | --- | --- | --- |
| Neobee M-5 | 5.7 | 4.3 | 4.2 |
| Lecithin | 2.7 | --- | 0.8 |
| Glycerol Monostearate | 4.8 | 4.1 | 4.2 |
| Triacetin | --- | --- | --- |
| Microcrystalline Wax (MP 82.2°C (180°F)) | 6.0 | 3.1 | 8.5 |
| Paraffin Wax (MP 57.2°C (135°F)) | 3.0 | --- | --- |
|  | 100.0 | 100.0 | 100.0 |

## BUBBLE BASES

| | Ex. 78 | Ex. 79 | Ex. 80 |
|---|---|---|---|
| Butyl Rubber | --- | --- | 2.5 |
| Styrene Butadiene Rubber | 10.3 | 1.6 | --- |
| Polyisobutylene | --- | 9.1 | 9.0 |
| Jelutong | --- | --- | --- |
| Ester Gum | 24.7 | 22.5 | 15.0 |
| Terpene Resin | --- | --- | --- |
| Low MW Polyvinylacetate | --- | --- | --- |
| High MW Polyvinylacetate | --- | 30.0 | 24.1 |
| Talc | --- | --- | 25.4 |
| Calcium Carbonate | 56.8 | 21.7 | --- |
| Acetylated Monoglyceride | --- | --- | 4.0 |
| Hydrogenated Cotton Seed Oil | 1.5 | --- | --- |
| Hydrogenated Soybean Oil | --- | --- | --- |
| Partially Hydrogenated Soybean and Palm Oil | --- | 2.0 | --- |
| Partially Hydrogenated Cottonseed Oil | --- | --- | --- |
| Neobee M-5 | 1.5 | 1.5 | 2.0 |
| Lecithin | --- | --- | 1.5 |
| Glycerol Monostearate | 1.1 | --- | 7.1 |
| Triacetin | --- | 4.5 | 3.2 |
| Microcrystalline Wax (MP 82.2°C (180°F)) | --- | --- | 1.2 |
| Paraffin Wax (MP 57.2°C (135°F)) | 4.1 | 7.1 | 5.0 |
| | 100.0 | 100.0 | 100.0 |

| | Ex. 81 | Ex. 82 | Ex. 83 |
|---|---|---|---|
| Butyl Rubber | 6.8 | 6.8 | 8.8 |
| Styrene Butadiene Rubber | --- | --- | --- |
| Polyisobutylene | 3.0 | 3.2 | 4.1 |
| Jelutong | 21.1 | 18.2 | 4.0 |
| Ester Gum | 16.7 | 16.6 | --- |
| Terpene Resin | --- | --- | 17.3 |
| Low MW Polyvinylacetate | 16.6 | 16.1 | 25.0 |
| High MW Polyvinylacetate | --- | --- | --- |
| Talc | --- | --- | 18.1 |
| Calcium Carbonate | 13.2 | 19.7 | --- |
| Acetylated Monoglyceride | --- | --- | --- |
| Hydrogenated Cotton Seed Oil | 2.3 | --- | 4.5 |
| Hydrogenated Soybean Oil | --- | 3.2 | 2.7 |
| Partially Hydrogenated Soybean and Palm Oil | --- | --- | --- |
| Partially Hydrogenated Cottonseed Oil | --- | 2.0 | --- |
| Neobee M-5 | 3.0 | 1.8 | 3.3 |
| Lecithin | --- | --- | --- |
| Glycerol Monostearate | 2.1 | 4.5 | 4.1 |
| Triacetin | --- | --- | --- |
| Microcrystalline Wax (MP 82.2°C (180°F)) | 15.2 | 6.8 | 6.1 |
| Paraffin Wax (MP 57.2°C (135°F)) | --- | 1.1 | 2.0 |
| | 100.0 | 100.0 | 100.0 |

| | Ex. 84 Bubble Base | Ex. 85 | Ex. 86 |
|---|---|---|---|
| Butyl Rubber | --- | 9.1 | 9.3 |
| Styrene Butadiene Rubber | --- | --- | --- |
| Polyisobutylene | 8.0 | 3.5 | 10.5 |
| Jelutong | --- | 3.1 | --- |
| Ester Gum | 14.7 | 1.5 | --- |
| Terpene Resin | --- | 15.0 | 13.0 |
| Low MW Polyvinylacetate | --- | 22.8 | 23.0 |
| High MW Polyvinylacetate | 34.5 | --- | --- |
| Talc | 28.6 | --- | --- |
| Calcium Carbonate | --- | 23.0 | 14.9 |
| Acetylated Monoglyceride | 2.5 | --- | --- |
| Hydrogenated Cotton Seed Oil | --- | 4.6 | 8.0 |
| Hydrogenated Soybean Oil | --- | 2.9 | 5.2 |
| Partially Hydrogenated Soybean and Palm Oil | --- | --- | 3.1 |
| Partially Hydrogenated Cottonseed Oil | --- | --- | 1.5 |
| Neobee M-5 | 0.9 | 2.4 | 2.1 |
| Lecithin | --- | 0.8 | --- |
| Glycerol Monostearate | 4.4 | 2.8 | 4.5 |
| Triacetin | 4.6 | --- | --- |
| Microcrystalline Wax (MP 82.2°C (180°F)) | --- | 7.0 | 4.4 |
| Paraffin Wax (MP 57.2°C (135°F)) | 1.8 | 1.5 | 0.5 |
| | 100.0 | 100.0 | 100.0 |

| | Ex. 87 | Ex. 88 | Ex. 89 Bubble Base |
|---|---|---|---|
| Butyl Rubber | 6.1 | 8.1 | — |
| Styrene Butadiene Rubber | — | — | 6.0 |
| Polyisobutylene | 7.1 | 5.5 | 7.5 |
| Jelutong | — | — | — |
| Ester Gum | — | 7.1 | 12.2 |
| Terpene Resin | 14.1 | 7.1 | — |
| Low MW Polyvinylacetate | 28.1 | 22.2 | — |
| High MW Polyvinylacetate | — | — | 29.0 |
| Talc | — | — | 28.9 |
| Calcium Carbonate | 18.9 | 25.6 | — |
| Acetylated Monoglyceride | — | — | 3.7 |
| Hydrogenated Cotton Seed Oil | 10.1 | 13.2 | 2.7 |
| Hydrogenated Soybean Oil | 5.1 | 5.1 | — |
| Partially Hydrogenated Soybean and Palm Oil | — | — | — |
| Partially Hydrogenated Cottonseed Oil | — | — | — |
| Neobee M-5 | 4.1 | 4.1 | 1.3 |
| Lecithin | 0.7 | 0.5 | — |
| Glycerol Monostearate | 1.5 | 1.5 | 3.1 |
| Triacetin | — | — | 1.2 |
| Microcrystalline Wax (MP 82.2°C (180°F)) | 3.1 | — | 4.4 |
| Paraffin Wax (MP 57.2°C (135°F)) | 1.1 | — | — |
| | 100.0 | 100.0 | 100.0 |

TABLE 13:

| WAX-FREE GUM BASES FOR USE IN CHEWING GUM HAVING SOME REDUCED TACK CHARACTERISTICS (EXAMPLES 90-119) | | | | | |
|---|---|---|---|---|---|
| EXAMPLES 90-94 | | | | | |
| IDENTIFICATION - EXAMPLES #: GENERIC INGREDIENTS | 90 | 91 | 92 | 93 | 94 |
| ** SYNTHETIC ELASTOMER ** | | | | | |

TABLE 13: (continued)

| WAX-FREE GUM BASES FOR USE IN CHEWING GUM HAVING SOME REDUCED TACK CHARACTERISTICS (EXAMPLES 90-119) | | | | | |
|---|---|---|---|---|---|
| EXAMPLES 90-94 | | | | | |
| IDENTIFICATION - EXAMPLES #: GENERIC INGREDIENTS | 90 | 91 | 92 | 93 | 94 |
| STYRENE-BUTADIENE ELASTOMER | 5.3 | - | 2.1 | 1.8 | - |
| BUTYL (ISOPRENE-ISOBUTYLENE) ELASTOMER | 8.6 | 7.9 | 7.2 | - | 8.1 |
| POLYISOBUTYLENE ELASTOMER | 7.1 | - | 7.4 | 24.8 | 3.6 |
| POLYVINYL ACETATE | 10.5 | 27.2 | 15.3 | 10.1 | 27.3 |
| ** ELASTOMER PLASTICIZERS ** | | | | | |
| GLYCEROL ESTERS OF ROSIN | 2.1 | - | 19.0 | 3.7 | - |
| GLYCEROL ESTERS OF PART HYD ROSIN | 4.3 | 18.2 | - | 7.9 | - |
| TERPENE RESINS | 10.8 | - | - | 7.1 | 26.8 |
| ** FILLER ** | | | | | |
| CALCIUM CARBONATE | - | 15.9 | 20.7 | 17.7 | 11.4 |
| TALC | 25.5 | - | - | - | - |
| ** SOFTENER ** | | | | | |
| HYDROGENATED COTTONSEED OIL | - | 6.0 | -- | 7.0 | - |
| HYDROGENATED SOYBEAN OIL | 4.3 | - | 6.1 | - | - |
| PARTIALLY HYDROGENATED SOYBEAN AND PALM OIL | 3.3 | - | 6.0 | - | 9.1 |
| PARTIALLY HYDROGENATED COTTONSEED OIL | - | 5.3 | - | 7.0 | - |
| NEOBEE M-5 | 7.7 | 11.3 | 12.2 | 7.0 | 5.2 |
| GLYCEROL MONOSTEARATE | 8.2 | 7.4 | 4.0 | 3.5 | 4.8 |
| LECITHIN | 2.3 | 0.8 | - | 2.4 | 3.7 |
| **TOTAL PERCENT** | 100.0 | 100.0 | 100.0 | 100.0 | 100.0 |
| EXAMPLES 95-97 | | | | | |
| IDENTIFICATION - EXAMPLES #: GENERIC INGREDIENTS | 95 | 96 | 97 | | |
| ** SYNTHETIC ELASTOMER ** | | | | | |
| STYRENE-BUTADIENE ELASTOMER | 5.2 | 2.1 | 5.9 | | |
| BUTYL (ISOPRENE-ISOBUTYLENE) ELASTOMER | 4.1 | 7.2 | 6.9 | | |
| POLYISOBUTYLENE ELASTOMER | 5.9 | 7.3 | 2.0 | | |
| POLYVINYL ACETATE | 25.7 | 15.3 | 24.8 | | |
| ** ELASTOMER PLASTICIZERS ** | | | | | |
| GLYCEROL ESTERS OF ROSIN | 23.5 | 19.1 | 8.6 | | |
| GLYCEROL ESTERS OF PART HYD ROSIN | - | - | 8.0 | | |
| TERPENE RESINS | 3.2 | - | 1.9 | | |
| ** FILLER ** | | | | | |
| CALCIUM CARBONATE | 15.1 | 20.7 | 9.9 | | |

TABLE 13:   (continued)

**WAX-FREE GUM BASES FOR USE IN CHEWING GUM HAVING SOME REDUCED TACK CHARACTERISTICS (EXAMPLES 90-119)**

| EXAMPLES 95-97 | | | | | |
|---|---|---|---|---|---|
| IDENTIFICATION - EXAMPLES #: GENERIC INGREDIENTS | 95 | 96 | 97 | | |
| TALC | - | - | 7.2 | | |
| ** SOFTENER ** | | | | | |
| HYDROGENATED COTTONSEED OIL | - | - | 7.0 | | |
| HYDROGENATED SOYBEAN OIL | - | - | - | | |
| PARTIALLY HYDROGENATED SOYBEAN AND PALM OIL | 5.5 | 8.3 | 10.1 | | |
| PARTIALLY HYDROGENATED COTTONSEED OIL | 3.0 | 9.6 | - | | |
| NEOBEE M-5 | 3.7 | 6.4 | 4.0 | | |
| GLYCEROL MONOSTEARATE | 5.1 | 4.0 | 3.7 | | |
| LECITHIN | - | - | - | | |
| **TOTAL PERCENT** | 100.0 | 100.0 | 100.0 | | |
| EXAMPLES 98-101 | | | | | |
| IDENTIFICATION - EXAMPLES #: GENERIC INGREDIENTS | 98 | 99 | 100 | 101 | |
| ** SYNTHETIC ELASTOMER ** | | | | | |
| STYRENE-BUTADIENE ELASTOMER | 3.9 | 2.1 | - | - | |
| BUTYL (ISOPRENE-ISOBUTYLENE) ELASTOMER | 5.3 | 6.0 | 8.9 | 3.6 | |
| POLYISOBUTYLENE ELASTOMER | 12.7 | 8.5 | 10.0 | 11.1 | |
| POLYVINYL ACETATE | 14.9 | 15.3 | 21.3 | 21.9 | |
| ** ELASTOMER PLASTICIZERS ** | | | | | |
| GLYCEROL ESTERS OF ROSIN | -- | 10.1 | -- | 19.6 | |
| GLYCEROL ESTERS OF PART HYD ROSIN | -- | 8.9 | - | 11.2 | |
| TERPENE RESINS | 21.4 | -- | 9.7 | 3.7 | |
| ** FILLER ** | | | | | |
| CALCIUM CARBONATE | 13.7 | 20.9 | 21.5 | 6.4 | |
| TALC | 1.4 | -- | - | -- | |
| ** SOFTENER ** | | | | | |
| HYDROGENATED COTTONSEED OIL | -- | 4.2 | - | 5.0 | |
| HYDROGENATED SOYBEAN OIL | 1.7 | - | 5.0 | - | |
| PARTIALLY HYDROGENATED SOYBEAN AND PALM OIL | -- | -- | - | 10 | |
| PARTIALLY HYDROGENATED COTTONSEED OIL | - | - | 15.0 | - | |
| NEOBEE M-5 | 17.0 | 20.0 | 3.2 | 4.2 | |
| GLYCEROL MONOSTEARATE | 5.7 | 4.0 | 5.4 | 3.3 | |
| LECITHIN | 2.3 | - | - | - | |
| **TOTAL PERCENT** | 100.0 | 100.0 | 100.0 | 100.0 | |

TABLE 13:   (continued)

**WAX-FREE GUM BASES FOR USE IN CHEWING GUM HAVING SOME REDUCED TACK CHARACTERISTICS (EXAMPLES 90-119)**

| EXAMPLES 102-106 | | | | | |
|---|---|---|---|---|---|
| IDENTIFICATION - EXAMPLES #: GENERIC INGREDIENTS | 102 | 103 | 104 | 105 | 106 |
| ** SYNTHETIC ELASTOMER ** | | | | | |
| STYRENE-BUTADIENE ELASTOMER | - | 3.2 | 4.1 | - | - |
| BUTYL (ISOPRENE-ISOBUTYLENE) ELASTOMER | 7.4 | 7.3 | 11.3 | 10.0 | 8.3 |
| POLYISOBUTYLENE ELASTOMER | 1.9 | 7.5 | 7.9 | 1.9 | 3.6 |
| POLYVINYL ACETATE | 24.8 | 21.1 | 18.2 | 27.6 | 27.5 |
| ** ELASTOMER PLASTICIZERS ** | | | | | |
| GLYCEROL ESTERS OF ROSIN | - | 15.3 | - | - | - |
| GLYCEROL ESTERS OF PART HYD ROSIN | - | 2.4 | 26.2 | - | - |
| TERPENE RESINS | 25.8 | 5.8 | 1.4 | 25.3 | 25.3 |
| ** FILLER ** | | | | | |
| CALCIUM CARBONATE | 18.6 | - | 13.6 | 11.3 | 11.3 |
| TALC | - | 14.8 | - | - | - |
| ** SOFTENER ** | | | | | |
| HYDROGENATED COTTONSEED OIL | 2.0 | 4.4 | 1.2 | - | - |
| HYDROGENATED SOYBEAN OIL | - | - | - | 2.4 | 4.0 |
| PARTIALLY HYDROGENATED SOYBEAN AND PALM OIL | - | 4.0 | - | - | 4.2 |
| PARTIALLY HYDROGENATED COTTONSEED OIL | - | - | - | - | - |
| NEOBEE M-5 | 10.3 | 11.4 | 7.0 | 13.0 | 8.3 |
| GLYCEROL MONOSTEARATE | 4.4 | 2.8 | 5.2 | 4.8 | 4.8 |
| LECITHIN | 4.8 | - | 3.9 | 3.7 | 2.7 |
| **TOTAL PERCENT** | 100.0 | 100.0 | 100.0 | 100.0 | 100.0 |
| EXAMPLES 107-110 | | | | | |
| IDENTIFICATION - EXAMPLES #: GENERIC INGREDIENTS | 107 | 108 | 109 | 110 | |
| ** NATURAL ELASTOMER ** | | | | | |
| NATURAL GUM | 22.0 | 25.1 | 22.8 | 17.6 | |
| ** SYNTHETIC ELASTOMER ** | | | | | |
| STYRENE-BUTADIENE ELASTOMER | - | 1.9 | 2.6 | - | |
| BUTYL (ISOPRENE-ISOBUTYLENE) ELASTOMER | 4.8 | 2.1 | 4.1 | 10.2 | |
| POLYISOBUTYLENE ELASTOMER | 5.7 | 4.7 | 3.2 | 2.1 | |
| POLYVINYL ACETATE | 16.4 | 24.8 | 16.3 | 26.9 | |
| ** ELASTOMER PLASTICIZERS ** | | | | | |
| GLYCEROL ESTERS OF ROSIN | 3.8 | 3.2 | 6.9 | 11.3 | |
| GLYCEROL ESTERS OF PART HYD ROSIN | 12.3 | 12.6 | 11.8 | 4.8 | |
| METHYL ESTERS OF ROSIN | -- | 2.1 | 1.7 | - | |
| TERPENE RESINS | - | - | - | - | |

TABLE 13: (continued)

| WAX-FREE GUM BASES FOR USE IN CHEWING GUM HAVING SOME REDUCED TACK CHARACTERISTICS (EXAMPLES 90-119) | | | | | |
|---|---|---|---|---|---|
| EXAMPLES 107-110 | | | | | |
| IDENTIFICATION - EXAMPLES #: GENERIC INGREDIENTS | 107 | 108 | 109 | 110 | |
| ** FILLER ** | | | | | |
| CALCIUM CARBONATE | - | 4.4 | 9.3 | - | |
| TALC | 7.1 | -- | -- | 4.6 | |
| ** SOFTENER ** | | | | | |
| HYDROGENATED COTTONSEED OIL | - | - | 10.0 | - | |
| HYDROGENATED SOYBEAN OIL | 5.0 | - | - | 5.6 | |
| PARTIALLY HYDROGENATED SOYBEAN AND PALM OIL | 11.0 | 12.0 | 3.7 | 5.0 | |
| PARTIALLY HYDROGENATED COTTONSEED OIL | 5.0 | -- | - | - | |
| NEOBEE M-5 | 0.8 | 0.6 | 4.5 | 5.6 | |
| GLYCEROL MONOSTEARATE | 6.1 | 3.8 | - | 6.3 | |
| LECITHIN | - | 2.7 | 3.1 | - | |
| **TOTAL PERCENT** | 100.0 | 100.0 | 100.0 | 100.0 | |
| EXAMPLES 111-114 | | | | | |
| IDENTIFICATION - EXAMPLES #: GENERIC INGREDIENTS | 111 | 112 | 113 | 114 | |
| ** NATURAL ELASTOMER ** | | | | | |
| NATURAL GUM | 15.7 | 22.6 | 22.2 | 21.1 | |
| ** SYNTHETIC ELASTOMER ** | | | | | |
| STYRENE-BUTADIENE ELASTOMER | 1.9 | - | - | - | |
| BUTYL (ISOPRENE-ISOBUTYLENE) ELASTOMER | 3.7 | 5.8 | 5.7 | 6.1 | |
| POLYISOBUTYLENE ELASTOMER | 4.1 | 3.1 | 3.1 | 2.8 | |
| POLYVINYL ACETATE | 26.2 | 20.4 | 22.0 | 18.0 | |
| ** ELASTOMER PLASTICIZERS ** | | | | | |
| GLYCEROL ESTERS OF ROSIN | - | - | - | 15.7 | |
| GLYCEROL ESTERS OF PART HYD ROSIN | 15.3 | 11.7 | 15.2 | - | |
| METHYL ESTERS OF ROSIN | - | 4.0 | - | - | |
| TERPENE RESINS | - | - | - | - | |
| ** FILLER ** | | | | | |
| CALCIUM CARBONATE | 12.2 | 11.6 | 11.4 | - | |
| TALC | - | - | - | 15.4 | |
| ** SOFTENER ** | | | | | |
| HYDROGENATED COTTONSEED OIL | - | 2.0 | - | 9.1 | |
| HYDROGENATED SOYBEAN OIL | 3.0 | - | 6.2 | - | |
| PARTIALLY HYDROGENATED SOYBEAN AND PALM OIL | -- | 15.0 | - | - | |
| PARTIALLY HYDROGENATED COTTONSEED OIL | 12.0 | - | 6.0 | - | |

TABLE 13:   (continued)

**WAX-FREE GUM BASES FOR USE IN CHEWING GUM HAVING SOME REDUCED TACK CHARACTERISTICS (EXAMPLES 90-119)**

| EXAMPLES 111-114 | | | | | |
|---|---|---|---|---|---|
| IDENTIFICATION - EXAMPLES #: GENERIC INGREDIENTS | 111 | 112 | 113 | 114 | |
| NEOBEE M-5 | 0.1 | 0.5 | 4.9 | | 6.0 |
| GLYCEROL MONOSTEARATE | 5.8 | 3.3 | 3.3 | | 5.8 |
| LECITHIN | - | - | - | | - |
| **TOTAL PERCENT** | 100.0 | 100.0 | 100.0 | | 100.0 |
| EXAMPLES 115-119 | | | | | |
| IDENTIFICATION - EXAMPLES #: GENERIC INGREDIENTS | 115 | 116 | 117 | 118 | 119 |
| ** **NATURAL ELASTOMER** ** | | | | | |
| NATURAL GUM | 23.8 | 18.7 | 14.4 | 18.2 | 25.2 |
| ** **SYNTHETIC ELASTOMER** ** | | | | | |
| STYRENE-BUTADIENE ELASTOMER | - | - | - | - | - |
| BUTYL (ISOPRENE-ISOBUTYLENE) ELASTOMER | 3.1 | 6.0 | 9.1 | 6.8 | 2.4 |
| POLYISOBUTYLENE ELASTOMER | 7.7 | 5.5 | 3.6 | 5.4 | 4.9 |
| POLYVINYL ACETATE | 20.5 | 14.8 | 18.1 | 15.5 | 19.9 |
| ** **ELASTOMER PLASTICIZERS** ** | | | | | |
| GLYCEROL ESTERS OF ROSIN | - | - | 11.9 | - | 15.6 |
| GLYCEROL ESTERS OF PART HYD ROSIN | 10.4 | 15.5 | 13.0 | 12.7 | - |
| METHYL ESTERS OF ROSIN | 2.0 | - | - | 2.6 | - |
| TERPENE RESINS | 5.1 | - | - | - | 2.1 |
| ** **FILLER** ** | | | | | |
| CALCIUM CARBONATE | - | 18.8 | 14.1 | 15.7 | - |
| TALC | 5.3 | - | - | - | 7.1 |
| ** **SOFTENER** ** | | | | | |
| HYDROGENATED COTTONSEED OIL | - | 6.5 | 7.0 | - | - |
| HYDROGENATED SOYBEAN OIL | 7.9 | - | - | 5.0 | 10.0 |
| PARTIALLY HYDROGENATED SOYBEAN AND PALM OIL | - | - | 2.0 | - | - |
| PARTIALLY HYDROGENATED COTTONSEED OIL | - | - | - | 6.0 | - |
| NEOBEE M-5 | 7.9 | 6.5 | 6.8 | 5.0 | 8.4 |
| GLYCEROL MONOSTEARATE | 6.3 | 7.7 | - | 7.1 | 4.4 |
| LECITHIN | - | - | - | - | - |
| **TOTAL PERCENT** | 100.0 | 100.0 | 100.0 | 100.0 | 100.0 |

TABLE 14:

| WAX-FREE GUM BASES FOR USE IN BUBBLE GUM (EXAMPLES 120-128) | | | | | |
|---|---|---|---|---|---|
| EXAMPLES 120-123 | | | | | |
| IDENTIFICATION - EXAMPLES #: GENERIC INGREDIENTS | 120 | 121 | 122 | 123 | |
| ** SYNTHETIC ELASTOMER ** | | | | | |
| POLYISOBUTYLENE ELASTOMER | 17.1 | 11.7 | 11.6 | 5.4 | |
| POLYVINYL ACETATE | 24.9 | 29.4 | 31.5 | 34.8 | |
| ** ELASTOMER PLASTICIZERS ** | | | | | |
| GLYCEROL ESTERS OF ROSIN | 6.8 | 10.7 | 19.8 | 16.3 | |
| GLYCEROL ESTERS OF PART HYD ROSIN | -- | - | - | -- | |
| ** FILLER ** | | | | | |
| CALCIUM CARBONATE | -- | -- | -- | 30.2 | |
| TALC | 34.7 | 34.1 | 21.9 | - | |
| ** SOFTENER ** | | | | | |
| NEOBEE M-5 | 1.1 | 3.4 | 3.0 | 2.0 | |
| GLYCEROL TRIACETATE | 4.6 | 4.4 | 5.0 | 5.3 | |
| GLYCEROL MONOSTEARATE | 5.8 | 4.3 | 4.9 | 3.9 | |
| ACETYLATED MONOGLYCERIDE | 5.0 | 2.0 | 2.3 | 2.1 | |
| **TOTAL PERCENT** | 100.0 | 100.0 | 100.0 | 100.0 | |
| EXAMPLES 124-128 | | | | | |
| IDENTIFICATION - EXAMPLES #: GENERIC INGREDIENTS | 124 | 125 | 126 | 127 | 128 |
| ** SYNTHETIC ELASTOMER ** | | | | | |
| POLYISOBUTYLENE ELASTOMER | 7.9 | 13.0 | 7.9 | 11.6 | 11.8 |
| POLYVINYL ACETATE | 34.2 | 37.1 | 34.2 | 37.8 | 35.6 |
| ** ELASTOMER PLASTICIZERS ** | | | | | |
| GLYCEROL ESTERS OF ROSIN | 14.8 | - | - | - | - |
| GLYCEROL ESTERS OF PART HYD ROSIN | - | 19.8 | 14.8 | 19.8 | 19.8 |
| ** FILLER ** | | | | | |
| CALCIUM CARBONATE | 29.8 | 16.5 | 29.8 | - | - |
| TALC | - | - | - | 17.0 | 19.7 |
| ** SOFTENER ** | | | | | |
| NEOBEE M-5 | 0.5 | 1.5 | 1.0 | 2.6 | 0.8 |
| GLYCEROL TRIACETATE | 5.3 | 5.6 | 4.3 | 3.0 | 4.0 |
| GLYCEROL MONOSTEARATE | 4.5 | 6.5 | 5.0 | 3.2 | 2.3 |
| ACETYLATED MONOGLYCERIDE | 3.0 | - | 3.0 | 5.0 | 6.0 |
| **TOTAL PERCENT** | 100.0 | 100.0 | 100.0 | 100.0 | 100.0 |

TABLE 15:

| WAX-FREE GUM BASES FOR USE IN CHEWING GUM HAVING NON-TACK CHARACTERISTICS (EXAMPLES 129-140) | | | | | | |
|---|---|---|---|---|---|---|
| EXAMPLES 129-134 | | | | | | |
| IDENTIFICATION - EXAMPLES #: GENERIC INGREDIENTS | 129 | 130 | 131 | 132 | 133 | 134 |
| ** SYNTHETIC ELASTOMER ** | | | | | | |
| BUTYL (ISOPRENE-ISOBUTYLENE) ELASTOMER | --- | --- | --- | 25.0 | 9.0 | 14.1 |
| POLYISOBUTYLENE | 35.0 | 17.0 | 20.0 | --- | 16.9 | 12.1 |
| POLYVINYL ACETATE | --- | 17.0 | 30.0 | 5.0 | 22.8 | 20.8 |
| ** FILLER ** | | | | | | |
| CALCIUM CARBONATE | 25.0 | 40.0 | 5.0 | 25.0 | --- | 13.9 |
| TALC | --- | --- | --- | --- | 12.0 | --- |
| ** SOFTENERS ** | | | | | | |
| HYDROGENATED SOYBEAN OIL | 5.0 | --- | 15.0 | --- | 14.8 | 7.7 |
| HYDROGENATED COTTONSEED OIL | 2.0 | 8.0 | --- | 15.0 | 17.0 | 10.0 |
| PARTIALLY HYDROGENATED SOYBEAN AND PALM OIL | 20.0 | 6.0 | --- | 19.0 | --- | 7.0 |
| PARTIALLY HYDROGENATED COTTON-SEED OIL | --- | --- | 10.0 | --- | --- | 6.7 |
| NEOBEE M-5 | 3.0 | 4.0 | 5.0 | 6.0 | 5.8 | 4.0 |
| GLYCEROL MONOSTEARATE | 10.0 | --- | 5.0 | 5.0 | 1.7 | 3.7 |
| LECITHIN | -- | 8.0 | --- | --- | --- | --- |
| EXAMPLES 135-140 | | | | | | |
| IDENTIFICATION - EXAMPLES #: GENERIC INGREDIENTS | 135 | 136 | 137 | 138 | 139 | 140 |
| ** SYNTHETIC ELASTOMER ** | | | | | | |
| BUTYL (ISOPRENE-ISOBUTYLENE) ELASTOMER | 16.0 | 9.9 | 9.9 | 10.0 | 10.0 | 13.3 |
| POLYISOBUTYLENE | 10.0 | 15.5 | 15.5 | 15.9 | 15.9 | 21.2 |
| POLYVINYL ACETATE | 24.0 | 22.0 | 22.0 | 21.7 | 21.6 | 29.1 |
| ** FILLER ** | | | | | | |
| CALCIUM CARBONATE | 5.0 | 12.9 | 12.9 | 13.3 | --- | 17.7 |
| TALC | 10.0 | --- | --- | --- | 13.1 | --- |
| ** SOFTENERS ** | | | | | | |
| HYDROGENATED SOYBEAN OIL | 5.0 | 14.0 | 11.0 | 3.3 | 16.5 | 6.1 |
| HYDROGENATED COTTONSEED OIL | --- | 13.0 | 13.0 | 13.3 | 16.5 | 6.1 |
| PARTIALLY HYDROGENATED SOYBEAN AND PALM OIL | 3.0 | 5.0 | 10.0 | --- | --- | 2.0 |
| PARTIALLY HYDROGENATED COTTON-SEED OIL | --- | --- | -- | 9.8 | --- | --- |
| NEOBEE M-5 | 20.0 | 5.0 | 3.0 | 10.0 | 3.8 | 3.2 |
| GLYCEROL MONOSTEARATE | 2.0 | 2.7 | 1.7 | 2.7 | 2.6 | 1.3 |
| LECITHIN | -- | -- | 1.0 | --- | --- | --- |

It should be understood that various changes and modifications to the presently preferred embodiments described herein will be apparent to those skilled in the art. It is therefore intended that such changes and modifications be covered by the appended claims.

## Claims

1. A gum base comprising:

   an elastomer; and
   a softener comprising of medium chain triglycerides to create a gum base that is softer than a gum base that does not include medium chain triglycerides.

2. A gum base as claimed in Claim 1 including at least 0.02% by weight medium chain triglycerides.

3. A gum base as claimed in Claim 1 or Claim 2 wherein the base is wax-free.

4. A gum base as claimed in any one of Claims 1 to 3 wherein the base is non-tacky.

5. A gum base as claimed in any one of Claims 1 to 4 wherein the base is a bubble gum-type base.

6. A gum base as claimed in any one of Claims 1 to 5 including at least one resin.

7. A gum base as claimed in any one of Claims 1 to 6 including at least one softener chosen from the group consisting of: tallow; hydrogenated tallow; hydrogenated and partially hydrogenated vegetable oils; cocoa butter; glycerol monostearate; glycerol triacetate; and lecithin.

8. A gum base as claimed in any one of Claims 1 to 7 wherein the medium chain triglycerides comprise not more the 20% by weight of the base.

9. A method for creating gum base comprising the step of substituting for a typical softener or emulsifier or hydrogenated fat in a gum base, medium chain triglycerides.

10. A method as claimed in Claim 9 wherein the medium chain triglycerides comprise from 0.02% to 20% by weight of the gum base formulation.

11. A method as claimed in Claim 9 or Claim 10 wherein the gum base includes medium chain triglycerides and another softener.

12. A method as claimed in any one of Claims 9 to 11 wherein the chewing gum includes lecithin.

13. A method as claimed in any one of Claims 9 to 12 wherein the gum base comprises at least 0.02% by weight medium chain triglycerides.

14. A method as claimed in any one of Claims 9 to 13 wherein the base is wax-free.

15. A method as claimed in any one of Claims 9 to 14 wherein the base is non-tacky.

16. A method as claimed in any one of Claims 9 to 15 wherein the base is a bubble gum-type base.

17. A method as claimed in any one of Claims 9 to 16 including at least one softener chosen from the group consisting of: tallow; hydrogenated tallow; hydrogenated and partially hydrogenated vegetable oils; cocoa butter; glycerol monostearate; glycerol triacetate; and lecithin.

18. A method as claimed in any one of Claims .9 to 17 wherein at least 40% of the hydrogenated fat in the gum base formulation is substituted for by medium chain triglycerides.

## Patentansprüche

1. Kaugummibase, umfassend:

   - ein Elastomer und

- einen Weichmacher, der mittelkettige Triglyceride umfaßt, so dass man eine Kaugummibase erhält, die weicher als eine Kaugummibase ohne mittelkettige Triglyceride ist.

2. Kaugummibase gemäß Anspruch 1, die mindestens 0,02 Gew.-% mittelkettige Triglyceride enthält.

3. Kaugummibase gemäß Anspruch 1 oder Anspruch 2, wobei die Kaugummibase wachsfrei ist.

4. Kaugummibase gemäß einem der Ansprüche 1 bis 3, wobei die Kaugummibase nicht klebrig ist.

5. Kaugummibase nach einem der Ansprüche 1 bis 4, wobei es sich bei der Kaugummibase um eine Kaugummibase des Ballonkaugummi-Typs handelt.

6. Kaugummibase nach einem der Ansprüche 1 bis 5, die mindestens ein Harz enthält.

7. Kaugummibase nach einern der Ansprüche 1 bis 6, die mindestens einen Weichmacher enthält, der aus der Gruppe bestehend aus Talg, hydriertem Talg, hydrierten und teilweise hydrierten pflanzlichen Ölen, Kakaobutter, Glycerinmonostearat, Glycerintriacetat und Lecithin ausgewählt wird.

8. Kaugummibase nach einem der Ansprüche 1 bis 7, bei der die mittelkettigen Triglyceride nicht über 20 Gew.-% der Kaugummibase ausmachen.

9. Verfahren zur Herstellung einer Kaugummibase, umfassend den Schritt des Ersetzens eines typischen Weichmachers oder Emulgators oder hydrierten Fettes in einer Kaugummibase durch mittelkettige Triglyceride.

10. Verfahren gemäß Anspruch 9, bei dem die mittelkettigen Triglyceride 0,02 Gew.-% bis 20 Gew.-% der Kaugummibase-Zusammensetzung ausmachen.

11. Verfahren gemäß Anspruch 9 oder Anspruch 10, bei dem die Kaugummibase mittelkettige Triglyceride und einen anderen Weichmacher enthält.

12. Verfahren gemäß einem der Ansprüche 9 bis 11, bei dem der Kaugummi Lecithin enthält.

13. Verfahren gemäß einem der Ansprüche 9 bis 12, bei dem die Kaugummibase mindestens 0,02 Gew.-% mittelkettige Triglyceride umfaßt.

14. Verfahren gemäß einem der Ansprüche 9 bis 13, bei dem die Kaugummibase wachsfrei ist.

15. Verfahren gemäß einem der Ansprüche 9 bis 14, bei dem die Kaugummibase nicht klebrig ist.

16. Verfahren gemäß einem der Ansprüche 9 bis 15, bei dem es sich bei der Kaugummibase um eine Kaugummibase des Ballonkaugummi-Typs handelt.

17. Verfahren gemäß einem der Ansprüche 9 bis 16, das mindestens einen Weichmacher enthält, der aus der Gruppe bestehend aus Talg, hydriertem Talg, hydrierten und teilweise hydrierten pflanzlichen Ölen. Kakaobutter, Glycerinmonostearat, Glycerintriacetat und Lecithin ausgewählt wird.

18. Verfahren gemäß einem der Ansprüche 9 bis 17. bei dem mindestens 40% des hydrierten Fettes in der Kaugummibase-Zusammensetzung durch mittelkettige Triglyceride ersetzt ist.

**Revendications**

1. Base de gomme comprenant :

un élastomère ; et
un émollient constitué de triglycérides à chaîne moyenne pour produire une base de gomme qui est plus molle qu'une base de gomme qui ne comprend pas de triglycérides à chaîne moyenne.

**2.** Base de gomme selon la revendication 1, comprenant au moins 0,02 % en poids de triglycérides à chaîne moyenne.

**3.** Base de gomme selon la revendication 1 ou la revendication 2, ladite base étant exempte de cire.

**4.** Base de gomme selon l'une quelconque des revendications 1 à 3, ladite base étant non collante.

**5.** Base de gomme selon l'une quelconque des revendications 1 à 4, ladite base étant une base de type gomme à faire des bulles.

**6.** Base de gomme selon l'une quelconque des revendications 1 à 5, comprenant au moins une résine.

**7.** Base de gomme selon l'une quelconque des revendications 1 à 6, comprenant au moins un émollient choisi dans l'ensemble constitué de : suif, suif hydrogéné, huiles végétales hydrogénées et huiles végétales partiellement hydrogénées, beurre de cacao, monostéarate de glycérol, triacétate de glycérol et lécithine.

**8.** Base de gomme selon l'une quelconque des revendications 1 à 7, dans laquelle les triglycérides à chaîne moyenne ne constituent pas plus de 20 % en poids de la base.

**9.** Procédé de production d'une base de gomme, comprenant l'étape consistant à remplacer un émollient ou un émulsifiant ou une graisse hydrogénée classique dans une base de gomme par des triglycérides à chaîne moyenne.

**10.** Procédé selon la revendication 9, dans lequel les triglycérides à chaîne moyenne constituent de 0,02 % à 20 % en poids de la formulation de la base de gomme.

**11.** Procédé selon la revendication 9 ou la revendication 10, dans lequel la base de gomme comprend des triglycérides à chaîne moyenne et un autre émollient.

**12.** Procédé selon l'une quelconque des revendications 9 à 11, dans lequel la gomme à mâcher comprend de la lécithine.

**13.** Procédé selon l'une quelconque des revendications 9 à 12, dans lequel la base de gomme comprend au moins 0,02 % en poids de triglycérides à chaîne moyenne.

**14.** Procédé selon l'une quelconque des revendications 9 à 13, dans lequel la base est exempte de cire.

**15.** Procédé selon l'une quelconque des revendications 9 à 14, dans lequel la base est non collante.

**16.** Procédé selon l'une quelconque des revendications 9 à 15, dans lequel la base est une base de type gomme à faire des bulles.

**17.** Procédé selon l'une quelconque des revendications 9 à 16, comprenant au moins un émollient choisi dans l'ensemble constitué de : suif, suif hydrogéné, huiles végétales hydrogénées et huiles végétales partiellement hydrogénées, beurre de cacao, monostéarate de glycérol, triacétate de glycérol et lécithine.

**18.** Procédé selon l'une quelconque des revendications 9 à 17, dans lequel au moins 40 % de la graisse hydrogénée dans la formulation de la base de gomme sont remplacés par des triglycérides à chaîne moyenne.